# EUROPÄISCHE PATENTSCHRIFT

(11) **EP 0 711 980 B1**
(45) Veröffentlichungstag und Bekanntmachung des Hinweises auf die Patenterteilung: **05.08.1998**
(21) Anmeldenummer: 95106664.6
(22) Anmeldetag: 03.05.1995
(51) Int. Cl.: G01F 3/10

(54) **Volumenzähler**
Liquid volume throughput meter
Compteur volumique

(30) Priorität: 11.11.1994 DE 9418104 U; 22.12.1994 DE 9420572 U
(43) Veröffentlichungstag der Anmeldung: 15.05.1996
(73) Patentinhaber: KEM KÜPPERS ELEKTROMECHANIK GMBH, D-85757 Karlsfeld (DE)
(72) Erfinder: Pucher, Hans-Jürgen, Dipl.-Ing.(FH), D-85253 Unterweikertshofen (DE)
(74) Vertreter: Heim, Hans-Karl, Dipl.-Ing.

(56) Entgegenhaltungen:
- EP-A- 0 305 733
- EP-A- 0 393 294
- EP-A- 0 500 519
- DE-U- 8 514 017
- US-A- 4 641 522

## Beschreibung

Die Erfindung betrifft einen Volumenzähler gemäß dem Oberbegriff des Anspruchs 1.

Ein gattungsgemäßer Volumenzähler geht aus der EP-A-0 393 294 hervor. Zur Abdichtung ist in einer der beiden Gehäusehälften eine ringförmige Ausnehmung vorgesehen, in die ein Dichtring eingelegt ist. Eine ähnliche Abdichtung mit einem eingelegten Dichtring ist auch aus der EP-A-0 305 733 und aus der US-A- 4 641 522 bekannt.

Volumenzähler haben die Aufgabe, einen Volumenstrom zu messen. Ihr Meßwerk wird nach dem Verdrängerprinzip eines Zahnradmotors von dem zu messenden Flüssigkeitsstrom angetrieben. Durch die Zähne werden beim Vorbeilaufen an einer Abgriffsbohrung Impulse erzeugt. Die Summe der Impulse entspricht der Summe der an der Meßstelle vorbeigelaufenen Anzahl der Zähne und ist ein Maß für den zu messenden Volumenstrom.

Bekannte Volumenzähler, die nach dem Zahnradmotorprinzip arbeiten, werden vorzugsweise zum Messen in der Hydraulikindustrie eingesetzt. Bei diesen Geräten werden die Zahnräder durch eine im Bodenteil und im Deckelteil eingebrachte Achse spielfrei und leicht drehbar gelagert. Die Abdichtung der beiden Gehäuseteile erfolgt durch eine O-Ring-Dichtung, welche in eine dazu passende Nut eingelegt ist. Die Achsen werden durch Lagerbüchsen positioniert, die in die Gehäuseteile eingebracht sind. Die genaue Positionierung aller Bauteile ist für eine hohe Meßgenauigkeit des Gerätes wichtig. Die Abtastung der Drehzahl wird durch berührungslos arbeitende, elektronische Sensoren realisiert, die am äußeren Umfang der Zahnräder angebracht sind. Die Befestigung der elektronischen oder auch optischen Abgriffe erfolgt meist über Bohrungen.

Die Volumenzähler eignen sich besonders zum Messen eines Volumenstroms eines gleichbleibenden Mediums. Bei der Messung von verschiedenen Medien, z.B. verschiedenen Lakken, treten erhebliche Probleme beim Wechsel zwischen den einzelnen Medien auf. Bekannte Volumenzähler weisen Toträume auf, in denen sich die Medien absetzen und teilweise aushärten können. Unter Toträumen werden hier Zwischenräume und Bereiche innerhalb des Volumenzählers verstanden, in die das zu messende Medium gelangen kann, aber in denen kein ständiger Durchfluß stattfindet. Bei einem Wechsel des Meßmediums, wie es z.B. in Lackieranlagen häufig der Fall ist, können die vorhandenen Rückstände zu einer Verunreinigung des neuen Meßmediums führen. Um diese Verunreinigung des Meßmediums zu vermeiden, werden bei einem Medienwechsel Spülzyklen zum Reinigen der Meßzelle durchgeführt. Bei bekannten Volumenzählern sind diese Spülzyklen zeit- und lösungsmittelintensiv.

Der Erfindung liegt die **Aufgabe** zugrunde, einen Volumenzähler der eingangs genannten Art zu schaffen, der mit geringem Aufwand an Zeit und Lösungsmitteln gereinigt werden kann.

Die Lösung dieser Aufgabe erfolgt gemäß den kennzeichnenden Merkmalen des Anspruchs 1. Vorteilhafte Weiterbildungen sind in den abhängigen Ansprüchen beschrieben.

Nach dem Grundgedanken der Erfindung soll der Volumenzähler und insbesondere seine Meßkammer möglichst ohne Toträume und andere Flächen und Bereiche, in denen sich das Medium absetzen könnte, ausgebildet sein. Die Toträume der Lagerung werden durch freistehende Achsen minimiert. Diese Achsen sind starr und nur einseitig befestigt und erübrigen eine Führung oder Lagerung auf der gegenüberliegenden Seite. Zur Abdichtung der Gehäuseteile werden Flachdichtungen verwendet. Dadurch werden Toträume vermieden, wie sie beispielsweise bei O-Ring-Dichtungen und den dazugehörigen Nuten entstehen.

In einer vorteilhaften Weiterbildung sind im Zentrum der Zahnräder Lagerbüchsen vorgesehen, deren Höhe der der Zahnräder entspricht oder minimal größer ist. Die Zahnräder sind dabei so ausgerichtet, daß ihre Oberfläche parallel und nah benachbart zur Oberfläche der Meßkammer ist. So werden einerseits Toträume möglichst vermieden und eine Reibung zwischen den Zahnrädern und der Meßkammerfläche durch die leicht erhöhten Lagerbüchsen verhindert. Ein direkter Kontakt zur Meßkammerwand ist also nur im Bereich des Zentrums der Zahnräder, also der Lagerbüchsen, vorgesehen.

Die Achsen weisen vorteilhafterweise einen Absatz auf, dessen Durchmesser im wesentlichen dem der Lagerbüchsen entspricht. So wird die sichere Halterung der Lagerbüchsen und damit auch der Zahnräder gewährleistet. Auf diese Weise entsteht eine sichere Führung der Zahnräder zu der Seite der Meßkammer hin, auf der die Achsen befestigt sind, und eine unerwünschte Reibung wird vermieden.

Zusätzlich können im Bereich des freistehenden Endes der Achsen Anlaufplatten in dem Gehäuse angeordnet sein. Die Anlaufplatten bestehen aus einem gehärteten Material und sind im wesentlichen plan zur Meßkammeroberfläche ausgebildet, wobei ihr Durchmesser im wesentlichen dem der Lagerbüchsen entspricht. Dadurch erfolgt die Reibung zwischen den Lagerbüchsen und dem Gehäuse auf einer definierten Fläche, wodurch ein präziser Meßvorgang gewährleistet wird. Durch die Ausbildung innerhalb des Gehäuses wird eine plane und fluchtende Gestaltung der Meßkammer erreicht, so daß keine Toträume entstehen, in denen sich das zu messende Medium absetzen könnte.

Die Materialien der Anlaufplatten und der Lagerbüchsen sind günstigerweise so gewählt, daß sie eine Gleitpaarung bilden. Auf diese Weise wird eine besonders verschleißarme Berührung und Reibuna erzeugt.

In einer bevorzugten Ausführungsform entspricht die Höhe der freistehenden Achsen im wesentlichen der Höhe der Meßkammer. Zur Vermeidung von Toträumen sollte das gesamte Meßkammervolumen von den Zahnrädern ausgefüllt sein. Dabei ist es günstig, wenn die freistehenden Achsen ebenfalls über die gesamte Höhe der Meßkammer ausgebildet sind und so den Zahnrädern im gesamten Bereich Führung geben.

In einer Weiterbildung der Erfindung wird das Anlagern und Anhaften des Meßmediums an den Bauteilen des Volumenzählers durch eine geeignete Oberflächenbeschichtung verhindert. Dazu werden die Zahnräder, die Anlaufplatten, die Achsen und die Lagerbüchsen mit Chromnitrid (CrN) oder Titannitrid (TiN) beschichtet.

In einer vorteilhaften Ausführungsform ist im Gehäuse eine Sacklochbohrung zur Aufnahme eines elektronischen Drehzahlsensors vorgesehen, wobei das Ende der Sacklochbohrung beabstandet von der Meßkammer ausgebildet ist. Auf diese Weise wird ein Eingriff in die Meßkammer vermieden und eine plane Meßkammerwand, die keine Toträume bildet, aufrechterhalten. Bei einer Drehzahlmessung, die auf einem magnetischen Meßprinzip beruht, sollte das Meßkammermaterial und insbesondere die zwischen Sacklochbohrung und Meßkammer vorhandene Wandung aus einem magnetisch neutralen Material, also mit einer Permeabilitätszahl nahe eins gestaltet sein.

Günstigerweise ist die Form der Flachdichtung der Meßkammerform angepaßt. Möglich ist jedoch auch eine durchgängige Flachdichtung, in die die Anlaufplatten integriert sind. Vorteilhafterweise weist die Flachdichtung eine definierte Höhe auf, um die genaue Einpassung der Zahnräder in die Meßkammer sicherzustellen. Dazu kann eine vorgepreßte Flachdichtung verwendet werden, die dann eine definierte Höhe aufweist.

In einer vorteilhaften Weiterbildung ist das Gehäuse aus höchstens zwei Teilen ausgebildet. Dadurch muß nur eine statt einer Vielzahl von Flächen abgedichtet werden, was zu einer Verringerung der Toträume beiträgt.

Ein Volumenzähler dieser Bauart kann besonders vorteilhaft für Messungen eingesetzt werden, bei denen das Meßmedium häufig gewechselt werden muß und eine Verunreinigung der nachfolgend gemessenen Flüssigkeit ausgeschlossen sein muß.

Bei Meßaufgaben, die eine gute Spülbarkeit des Volumenzählers erfordern, läßt ein erfindungsgemäßer Volumenzähler eine erhebliche Reduzierung der Spülzeit und des dazu notwendigen Lösungsmittelverbrauchs zu.

Nachfolgend wird die Erfindung anhand einer Zeichnung weiter erläutert. Im einzelnen zeigen die Darstellungen in:
- Fig. 1: einen Schnitt durch einen Volumenzähler in der Ebene der Lagerung der Zahnräder;
- Fig. 2: einen Schnitt durch einen Volumenzähler in der Ebene der Ein- und Auslaufkanäle ohne Zahnräder;
- Fig. 3: eine Draufsicht auf einen geöffneten Volumenzähler mit eingelegter Flachdichtung;
- Fig. 4: eine Ausschnittsansicht der Zahnradlagerung; und
- Fig. 5: eine Draufsicht auf eine Flachdichtung mit ausgeformter Meßkammer.

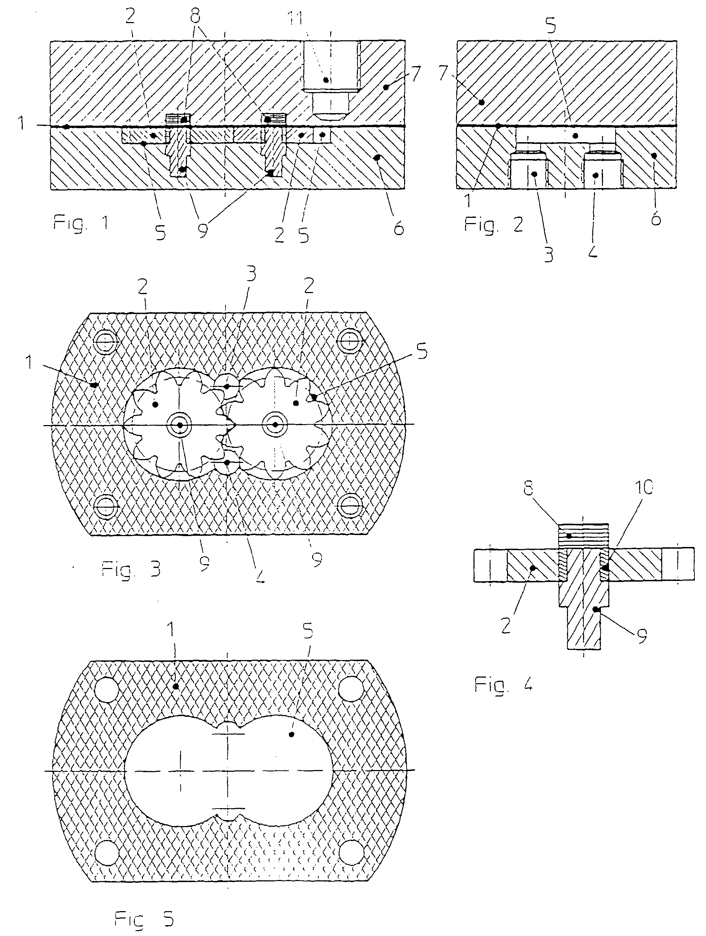

Figur 1 zeigt einen Schnitt durch einen Volumenzähler in der Ebene der Lagerung der Zahnräder 2. Der Volumenzähler ist nach Art eines Zahnradmotors aufgebaut. Die beiden Gehäusehälften 6 und 7, die auch als Deckel und Boden bezeichnet werden können, werden durch eine Flachdichtung 1 abgedichtet. Im unteren Gehäuseteil 6 sind Achsen 9 befestigt, auf denen mittels einer Büchse 10 jeweils ein Zahnrad 2 gelagert ist. Innerhalb des Gehäuses 6, 7 ist eine Meßkammer 5 ausgebildet in denen die Zahnräder 2 vorgesehen sind. Ein Anlaufen der Zahnräder 2 an der unteren Meßkammerwand wird durch einen Absatz in der Achse 9 verhindert. Das Anlaufen der Zahnräder 2 an der oberen Meßkammerwand wird durch Lagerplatten 8, die im oberen Gehäuseteil 7 integriert sind, verhindert. Im oberen Gehäuseteil 7 ist außerdem eine Sacklochbohrung 11 nahe des Kopfkreises eines der Zahnräder 2 eingebracht, an der ein elektronischer Signalabgriff befestigt werden kann. Die Bohrung 11 hat keine Verbindung zur Meßkammer 5 und stellt deshalb auch keine Beeinflussung der Spülbarkeit oder der Meßgenauigkeit dar.

In Figur 2 ist ein Schnitt durch einen Volumenzähler in der Ebene der Ein- und Auslaufkanäle 3, 4 ohne Zahnräder dargestellt. Sowohl der Einlaufkanal 3 als auch der Auslaufkanal 4 befinden sich im unteren Gehäuseteil 6 und führen in die Meßkammer 5. Im allgemeinen ist die Funktion des unteren Gehäuseteils 6, also des Bodens, mit der Funktion des oberen Gehäuseteils 7, also des Deckels, austauschbar. Das heißt, daß Ein- und Auslaufkanäle 3, 4, die Lagerung der Achsen oder die Zuführung der Sacklochbohrung 11 sowohl im unteren Gehäuseteil 6 als auch im oberen Gehäuseteil 7 vorgesehen sein kann.

Eine Draufsicht auf einen geöffneten Volumenzähler mit eingelegter Flachdichtung 1 ist in Figur 3 gezeigt. Ein Einlaufkanal 3 und ein Auslaufkanal 4 sind im Bereich der beiden kämmenden Zahnräder 2 angeordnet. Die Flachdichtung 1 ist in der Form an die Ein- und Auslaufkanäle 3, 4 und die Meßkammer 5 angepaßt.

In Figur 4 ist eine Ausschnittsansicht aus Fig. 1 dargestellt, in der die Achse 9 mit einem Absatz versehen ist, um ein Anlaufen der Zahnräder an der unteren Meßkammerwand zu verhindern. Eine Büchse 10 ist auf der Achse 9 befestigt und steht ein wenig nach oben über und steht in Berührungskontakt mit der Anlaufplatte 8.

Die in der Fig. 4 gezeigen Teile, also die Achse 9, die Büchse 10, das Zahnrad 2 und die Anlaufplatten 8 werden mit Chromnitrid oder Titannitrid oberflächebeschichtet, um ein Anhaften des zu messenden Mediums zu vermeiden. Das Zahnrad 2 und die Büchse 10 werden zweckmäßiger Weise gemeinsam beschichtet.

In Fig. 5 ist eine Draufsicht auf eine Flachdichtung 1 dargestellt. Die Flachdichtung 1 enthält Ausnehmungen für Verbindungsschrauben und eine Ausnehmung in Form der Meßkammer 5. Hier ist jedoch auch eine durchgängige Flachdichtung 1 denkbar, bei der jedoch die Höhe der Zahnräder anders bemessen sein müßte. Bei der hier dargestellten Flachdichtung ist es wichtig, die Höhe der Flachdichtung 1 zu kennen, um die Zahnräder so dimensionieren zu können, daß ihre Oberseite bis nahe an die Oberfläche des oberen Deckelteils 7 reicht.

## Patentansprüche

1. Volumenzähler mit zwei Gehäuseteilen (6, 7), welche eine Meßkammer (5) umschließen, in der zwei miteinander kämmende Zahnräder (2) angeordnet sind, wobei eine Dichtung zur Abdichtung der Gehäuseteile (6, 7) vorgesehen ist,
dadurch **gekennzeichnet,**
daß die an die Meßkammer (5) angrenzende Oberflächenseite der Gehäuseteile (6, 7) jeweils plan ausgebildet ist,
daß die Dichtung als eine Flachdichtung (1) ausgebildet ist und
daß die Flachdichtung (1) an die Form der an die Meßkammer (5) angrenzenden Oberflächenseite der beiden Gehäuseteile (6, 7) angepaßt ist, wobei die Flachdichtung (1) an der an die Meßkammern (5) angrenzenden Oberflächenseite der beiden Gehäuseteile (6, 7) flächig aufliegt, so daß die Höhe der Flachdichtung dem Abstand zwischen den beiden Gehäuseteilen (6, 7) entspricht.

2. Volumenzähler nach Anspruch 1,
dadurch **gekennzeichnet,**
daß die Zahnräder (2) auf freistehenden Achsen (9) drehbar angeordnet sind.

3. Volumenzähler nach Anspruch 1 oder 2,
dadurch **gekennzeichnet,**
daß im Zentrum der Zahnräder (2) Lagerbüchsen (10) vorgesehen sind, deren Höhe der der Zahnräder (2) entspricht oder minimal größer ist und
daß die Oberfläche der Zahnräder (2) parallel und nah benachbart zur Oberfläche der Meßkammer (5) ausgerichtet ist.

4. Volumenzähler nach einem der vorhergehenden Ansprüche,
dadurch **gekennzeichnet,**
daß die Achsen (9) einen Absatz aufweisen, dessen Durchmesser im wesentlichen dem der Lagerbüchsen (10) entspricht, und
daß im Bereich des freistehenden Endes der Achsen (9) Anlaufplatten (8) in dem Gehäuseteil (7) angeordnet sind.

5. Volumenzähler nach Anspruch 4,
dadurch **gekennzeichnet,**
daß die Anlaufplatten (8) aus einem gehärteten Material bestehen und im wesentlichen plan zur Meßkammeroberfläche in dieser ausgebildet sind,
daß der Durchmesser der Anlaufplatten (8) im wesentlichen dem der Lagerbüchsen (10) entspricht, und
daß die Materialien der Anlaufplatten (8) und der Lagerbüchsen (10) eine Gleitpaarung bilden.

6. Volumenzähler nach einem der vorhergehenden Ansprüche,
dadurch **gekennzeichnet,**
daß die Höhe der freistehenden Achsen (9) im wesentlichen der Höhe der Meßkammer (5) entspricht.

7. Volumenzähler nach einem der vorhergehenden Ansprüche,
dadurch **gekennzeichnet,**
daß die Zahnräder (2), die Anlaufplatten (8), die Achsen (9) und die Lagerbüchsen (10) mit Chromnitrid oder Titannitrid oberflächenbeschichtet sind.

8. Volumenzähler nach einem der vorhergehenden Ansprüche,
dadurch **gekennzeichnet,**
daß im Gehäuse (6, 7) eine Sacklochbohrung (11) zur Aufnahme eines elektronischen Drehzahlsensors vorgesehen ist, und
daß das Ende der Sacklochbohrung (11) beabstandet von der Meßkammer (5) ausgebildet ist.

9. Volumenzähler nach einem der vorhergehenden Ansprüche,
dadurch **gekennzeichnet,**
daß die Flachdichtung (1) in ihrer Form der Meßkammer angepaßt ist,
daß die Flachdichtung (1) eine definierte Höhe aufweist, und
daß die Flachdichtung (1) vorgepreßt ist.

10. Volumenzähler nach einem der vorhergehenden Ansprüche,
dadurch **gekennzeichnet,**
daß das Gehäuse (6, 7) aus höchstens zwei Teilen besteht.

## Claims

1. Volume meter having two casing parts (6, 7) which enclose a measuring chamber (5) in which two meshing gears (2) are located and a gasket is provided for sealing the casing parts (6, 7),
**characterized in**
that the surface sides of the casing parts (6, 7), adjacent to the measuring chamber (5) are in each case formed plane,
that the sealing is formed as a flat sealing (1), and
that the flat sealing (1) is adapted to the shape of the surface sides of the two casing parts (6, 7) adjacent to the measuring chamber (5), the flat gasket (1) resting planar on the surface sides of the two casing parts (6, 7) adjacent to the measuring chamber (5), so that the height of the flat gasket corresponds to the distance between the two casing parts (6, 7).

2. Volume meter according to claim 1,
**characterized in**
that the gears (2) are rotatably placed on self-supporting spindles (9).

3. Volume meter according to claim 1 or 2,
**characterized in**
that in the centre of the gears (2) are provided bearing bushes (10), whose height corresponds to or is slightly larger than that of the gears (2), and
that the surface of the gears (2) is oriented parallel and closely adjacent to the surface of the measuring chamber (5).

4. Volume meter according to claim 3,
**characterized in**
that the spindles (9) have a step, whose diameter substantially corresponds to that of the bearing bushes (10), and
that in the vicinity of the self-supporting end of the spindles (9) base plates (8) are provided in the casing parts (7).

5. Volume meter according to claim 4,
**characterized in**
that the base plates (8) are made from a hardened material and are formed therein substantially plane to the measuring chamber surface,
that the diameter of the base plates (8) substantially corresponds to that of the bearing bushes (10), and
that the materials of the base plates (8) and the bearing bushes (10) form a sliding pair.

6. Volume meter according to one of the preceding claims,
**characterized in**
that the height of the self-supporting spindles (9) substantially corresponds to the height of the measuring chamber (5).

7. Volume meter according to one of the preceding claims,
**characterized in**
that the gears (2), base plates (8), spindles (9) and bearing bushes (10) are surface-coated with chromium nitride or with titanium nitride.

8. Volume meter according to one of the preceding claims,
**characterized in**
that the blind hole (11) for receiving an electronic speed sensor is provided in the casing (6, 7), and
that the end of the blind hole (11) is spaced from the measuring chamber (5).

9. Volume meter according to one of the preceding claims,
**characterized in**
that the shape of the flat gasket (1) is adapted to the measuring chamber,
that the flat gasket (1) has a clearly defined height, and
that the flat gasket (1) is rough pressed.

10. Volume meter according to one of the preceding claims,
**characterized in**
that the casing (6, 7) is made from at the most two parts.

## Revendications

1. Compteur volumique ayant deux parties de boîtier (6, 7) qui entourent une chambre de mesure (5), dans laquelle sont disposées deux roues dentées (2) engrenant l'une dans l'autre, un joint pour permettre l'étanchéité des parties de boîtier (6, 7) étant prévu,
caractérisé en ce que
• la face superficielle des parties de boîtier (6, 7) adjacente à la chambre de mesure (5) est réalisée respectivement plane,
• la garniture d'étanchéité est idéalisée comme un joint plat (1),
• la garniture plate (1) est adaptée à la forme, des faces superficielles des deux parties de boîtier (6, 7) adjacentes à la chambre de mesure (5), le joint appuyant de manière plane sur la face superficielle des deux parties de boîtier (6, 7), adjacentes aux chambres de mesure (5), de sorte que la hauteur du joint plat correspond à l'intervalle entre les deux parties de boîtier (6, 7).

2. Compteur volumique selon la revendication 1,
caractérisé en ce que
les roues dentées (2) sont placées mobiles en rotation sur des axes libres.

3. Compteur volumique selon la revendication 1 ou 2
caractérisé en ce que
• sont prévues au centre des roues dentées (2) des coussinets (10) dont la hauteur correspond à celle des roues dentées (2) ou est plus grande de manière minime et,
• la surface des roues dentées (2) est ajustée parallèlement et au voisinage proche de la surface de la chambre de mesure (5).

4. Compteur volumique selon une des revendications précédentes,
caractérisé en ce que
• les axes (9) comportent un gradin dont le diamètre correspond essentiellement à celui des coussinets (10), et
• dans la zone de l'extrémité libre des axes (9) sont disposées des plaques d'arrêt (8) dans la partie de boîtier (7).

5. Compteur volumique selon la revendication 4,
caractérisé en ce que
• les plaques d'arrêt (8) se composent d'un matériau durci et sont réalisées d'une manière essentiellement plane par rapport à la surface de la chambre de mesure dans cette dernière,
• le diamètre des plaques d'arrêt (8) correspond essentiellement à celui des coussinets (10), et
• les matériaux des plaques d'arrêt (8) et des coussinets (10) forment un appariement de glissement.

6. Compteur volumique selon une des revendications précédentes,
caractérisé en ce que
la hauteur des axes libres (9) correspond essentiellement à la hauteur de la chambre de mesure (5).

7. Compteur volumique selon une des revendications précédentes,
caractérisé en ce que
les roues dentées (2), les plaques d'arrêt (8), les axes (9) et
les coussinets (10) sont enduits superficiellement de nitrure de chrome ou de nitrure de titane.

8. Compteur volumique selon une des revendications précédentes,
caractérisé en ce que
• dans le boîtier (6, 7) est prévu un alésage borgne (11) pour recevoir un capteur de vitesse de rotation électronique, et
• l'extrémité de l'alésage borgne (11) est réalisé à une certaine distance de la chambre de mesure (5).

9. Compteur volumique selon une des revendications précédentes,
caractérisé en ce que
• la garniture plate (1) est adaptée dans sa forme à la chambre de mesure,
• la garniture plate (1) comporte une hauteur définie et
• la garniture plate (1) est précomprimée.

10. Compteur volumique selon une des revendications précédentes,
caractérisé en ce que
le boîtier (6, 7) se compose au maximum de deux parties.
